# EUROPÄISCHE PATENTSCHRIFT

(11) **EP 3 412 403 B1**
(45) Veröffentlichungstag und Bekanntmachung des Hinweises auf die Patenterteilung: **17.07.2024**
(21) Anmeldenummer: 18176584.3
(22) Anmeldetag: 07.06.2018
(51) Int. Cl.: B23Q 1/48, B23Q 3/155, B23Q 3/157, B23Q 7/04, B23Q 7/10

(54) **WERKZEUGMASCHINE ZUM ZERSPANENDEN BEARBEITEN EINES WERKSTÜCKS**
MACHINE TOOL FOR MACHINING A WORKPIECE
MACHINE-OUTIL DESTINÉE À L'USINAGE PAR ENLÈVEMENT DE COPEAUX D'UNE PIÈCE À USINER

(30) Priorität: 07.06.2017 DE 102017209606
(43) Veröffentlichungstag der Anmeldung: 12.12.2018
(73) Patentinhaber: DMG MORI Pfronten GmbH, 87459 Pfronten (DE)
(72) Erfinder: Geißler, Alfred, 87459 Pfronten (DE); Jung, Robert, 87459 Pfronten (DE); Rinderle, Martin, 87474 Buchenberg (DE); Lau, Florian, 87459 Pfronten (DE)
(74) Vertreter: MERH-IP Matias Erny Reichl Hoffmann Patentanwälte PartG mbB

(56) Entgegenhaltungen:
- EP-A1- 2 055 413
- DE-A1- 10 104 181
- DE-A1- 102012 107 295
- DE-A1- 102013 109 982

## Beschreibung

Die vorliegende Erfindung betrifft eine Werkzeugmaschine zum zerspanenden Bearbeiten eines Werkstücks. Des Weiteren betrifft die vorliegende Erfindung ein Verfahren zum zerspanenden Bearbeiten eines Werkstücks mittels eines Werkzeugs in einer erfindungsgemäßen Werkzeugmaschine.

### HINTERGRUND DER ERFINDUNG

Werkzeugmaschinen dienen der Fertigung von Werkstücken mittels Werkzeugen, die anhand von numerisch gesteuerten Achsen entsprechend eines vorgegebenen NC-Programmes relativ zueinander bewegt werden.

Dabei haben sich insbesondere im Bereich der Universalmaschinen in den letzten Jahren Kombinationen von Fertigungsverfahren etabliert, um dem Anwender ein breiteres Spektrum an Fertigungsmöglichkeiten mit einer Werkzeugmaschine zu bieten; so zum Beispiel die Kombination aus einer Drehmaschine und einer Fräsmaschine.

Da es bei beiden Verfahren eine nicht unerhebliche Rolle spielt, ob das Werkzeug rotatorisch angetrieben wird und das Werkstück ruht, wie es beim Fräsen üblich ist, oder das Werkzeug ruht und entsprechend das Werkstück rotatorisch angetrieben wird, wie beim Drehen, müssen zuweilen diverse Anpassungen an den bis dato bekannten Werkzeugmaschinen vorgenommen werden, um entsprechend mit einer Maschine beide Fertigungsverfahren ausführen zu können.

Hierbei ergeben sich jedoch die Probleme, dass vor allem ein drehend zu bearbeitendes Werkstück, das auf einem konventionellen Maschinentisch mit steuerbarer Rotationsachse gespannt ist, sich kaum auf die Drehzahlen beschleunigen lässt, die für das drehende Bearbeiten des Werkstücks benötigt werden. Grund dafür ist, dass die steuerbaren Rotationsachsen der Werkzeugmaschine, die sonst üblicherweise für die relative Zustellung von Werkzeug und Werkstück zuständig sind, nicht für solch hohe Drehzahlen ausgelegt sind.

Hierbei kann es zu erheblichen Einbußen in Bezug auf die Qualität des fertig bearbeiteten Werkstücks kommen, falls das Werkstück mit einer zu geringen Drehzahl drehend bearbeitet wird.

Aus der DE 10 2009 027 463 A1 ist bereits eine Werkzeugmaschine bekannt, bei der die Einspannungen von Werkstück und Werkzeug umgekehrt sind. Dabei ist das Werkstück in der Arbeitsspindel eingespannt, um es mit der entsprechend erforderlichen Drehzahl anzutreiben, und das das Werkstück bearbeitende Werkzeug ist auf dem Maschinentisch montiert. Ferner kann durch diese Einspannsituation das Werkstück automatisiert ein- und ausgewechselt werden.

Jedoch ergibt sich hieraus das Problem, dass, sollte das Werkstück neben einer drehenden Bearbeitung weiterhin fräsend bearbeitet werden, sowohl das Werkstück als auch das Werkzeug wieder umgespannt werden müssten (Werkzeug auf Arbeitsspindel, Werkstück auf Maschinentisch), so dass die Werkzeugmaschine erneut eingerichtet werden müsste und dadurch die Gesamtbearbeitungszeit eines solchen Werkstücks deutlich zunehmen würde.

Ein weiteres Problem besteht darin, dass die auf dem Maschinentisch befestigten Werkzeuge, im Hinblick auf eine möglichst weitgehend vollautomatisierte Fertigung von einer Vielzahl von Werkstücken, nur bedingt mit wenigen Verfahrschritten automatisiert ausgewechselt werden können. In der Regel muss der Maschinentisch dafür in eine Position vorgefahren werden, in der das verwendete Werkzeug entnommen und ein anderes Werkzeug eingesetzt werden kann. Jedoch ist der Maschinentisch mit entsprechenden Antrieben in den meisten Fällen ein Element der Werkzeugmaschine mit vergleichsweise großer Eigenmasse, so dass eine schnelle Positionierung nur schwer möglich ist und daher beim automatisierten Wechsel des Werkzeugs immer wertvolle Fertigungszeit verloren geht.

Aus der DE 101 04 181 A1 ist eine Drehmaschine bekannt, die eine feststehende Arbeitsspindel und eine auf einem Kreuztisch verfahrbare Arbeitsspindel aufweist, oder die zwei Arbeitsspindeln aufweist, wobei jede der Arbeitsspindeln entlang einer Linearasche verfahren werden kann und die Linearachsen senkrecht zueinander stehen.

Aus der EP 2 055 413 A1 ist eine Werkzeugmaschine bekannt, die eine feststehende Arbeitsspindel, eine verfahrbare und schwenkbare Arbeitsspindel sowie einen Werkzeugzuführer aufweist.

Aus der DE 10 2012 107295 A1 ist eine Werkzeugmaschine bekannt, die eine werkzeugtragenden Arbeitsspindel und eine werkstücktragenden Arbeitsspindel umfasst, die jeweils durch eine Vielzahl von Linear- und Schwenkachsen relativ zueinander positioniert werden können. Außerdem bildet die DE 10 2012 107295 A1 die Basis vom Oberbegriff des Anspruchs 1.

### ZUSAMMENFASSUNG DER ERFINDUNG

Eine Aufgabe der vorliegenden Erfindung ist es daher, eine Werkzeugmaschine zum zerspanenden Bearbeiten eines Werkstücks bereitzustellen, mit der die obigen Probleme vermieden werden.

Des Weiteren ist es eine Aufgabe der vorliegenden Erfindung, ein Verfahren zum zerspanenden Bearbeiten eines Werkstücks mittels eines Werkzeugs in einer erfindungsgemäßen Werkzeugmaschine bereitzustellen.

Diese Aufgaben werden gelöst durch eine Werkzeugmaschine nach Anspruch 1 und ein Verfahren nach Anspruch 9. Die abhängigen Ansprüche beziehen sich auf vorteilhafte Ausführungsbeispiele der erfindungsgemäßen Werkzeugmaschine und des erfindungsgemäßen Verfahrens.

Die erfindungsgemäße Werkzeugmaschine zum zerspanenden Bearbeiten eines Werkstücks mittels eines Werkzeugs umfasst ein Spannmittel zum Einspannen des Werkstücks und ein Aufnahmemittel zum Aufnehmen des Werkzeugs, wobei das Spannmittel an einem Spindelkopf einer spannmitteltragenden Arbeitsspindel montiert ist und das Aufnahmemittel an einem Spindelkopf einer aufnahmemitteltragenden Arbeitsspindel montiert ist, und die Werkzeugmaschine dazu eingerichtet ist, die beiden Arbeitsspindeln mittels numerisch steuerbarer Achsen relativ zueinander derart zu positionieren, dass das in dem Spannmittel eingespannte Werkstück durch das in dem Aufnahmemittel aufgenommene Werkzeug bearbeitet werden kann, wobei die beiden Arbeitsspindeln jeweils durch mindestens eine Rotationsachse und mindestens eine Linearachse zueinander zustellbar sind. Die Werkzeugmaschine umfasst ferner zwei Magazine, die jeweils zur Ablage von werkstücktragenden und nicht werkstücktragenden Spannmitteln sowie zur Ablage von werkzeugtragenden und nicht werkzeugtragenden Aufnahmemitteln eingerichtet sind, wobei die Werkzeugmaschine ferner zwei Manipulatoren aufweist, die zum Ein- und Auswechseln von werkstücktragenden und/oder nicht werkstücktragenden Spannmitteln und werkzeugtragenden und/oder nicht werkzeugtragenden Aufnahmemitteln an den Arbeitsspindeln eingerichtet sind, und wobei jeder der beiden Arbeitsspindeln zumindest eines der beiden Magazine zugewiesen ist und jeweils einer der beiden Manipulatoren zwischen einer der beiden Arbeitsspindeln und deren zugewiesenem Magazin agiert

In der erfindungsgemäßen Werkzeugmaschine können beide Spindeln überaus flexibel eingesetzt werden und sowohl das Werkstück in einer ruhenden Position halten oder entsprechend rotatorisch antreiben. Gleiches kann natürlich auch mit dem Werkzeug erfolgen, so dass in kürzester Zeit zwischen einer Fräsbearbeitung und einer Drehbearbeitung hin- und hergewechselt werden kann, ohne dabei das Werkstück umspannen zu müssen. Dies bringt weiterhin den Vorteil, dass die für die automatisierte Bearbeitung des Werkstücks wichtigen Bezugspunkte der Werkzeugmaschine am Werkstück nicht verloren gehen und eine erneute Einrichtung der Werkzeugmaschine nicht notwendig wird.

Dies ist besonders dann vorteilhaft, wenn das Werkstück von allen Seiten, also auch von der eingespannten Seite her, bearbeitet werden muss. Hier kann die Übergabe des Werkstücks an die andere Arbeitsspindel automatisiert erfolgen und die bis dahin eingespannte Seite des Werkstücks kann nun durch die ursprünglich werkstücktragende Arbeitsspindel bearbeitet werden.

Ferner ermöglicht die erfindungsgemäße Werkzeugmaschine, dass das Werkstück zwischen den Arbeitsspindeln auch direkt übergeben werden kann. Hier kann der Aufbau einer mehrachsigen Werkzeugmaschine vorteilhaft genutzt werden, um beispielsweise die beiden Arbeitsspindeln in eine koaxiale Ausrichtung zueinander zu bringen und dann das Werkstück entlang der gemeinsamen Spindelachse der beiden Arbeitsspindeln zu führen und der nicht werkstücktragenden Spindel zu übergeben, damit das Werkstück dort mit einem Spannelement, z. B Spannfutter oder Backenfutter, eingespannt werden kann.

Neben der erhöhten Flexibilität der Werkzeugmaschine, die sowohl für die fräsende Bearbeitung als auch für die drehende Bearbeitung genutzt werden kann, kann auch der Automatisierungsgrad der Werkzeugmaschine weiter erhöht werden, da alle Seiten eines Werkstücks automatisiert bearbeitet werden können, ohne dass ein Facharbeiter bzw. Maschinenbediener händisch eine Umspannung und Neueinrichtung der Maschine innerhalb eines Bearbeitungszyklus vornehmen muss.

Die beiden Manipulatoren können sehr flexibel für beide Arbeitsspindeln eingesetzt werden und sowohl Spann- als auch Aufnahmemittel, die wiederum sowohl werkstücktragend als auch nicht werkstücktragend bzw. werkzeugtragend als auch nicht werkzeugtragend sein können, der jeweiligen Arbeitsspindel zuführen oder entsprechend austauschen.

Es kann dabei auch eine Art überkreuzendes Agieren der Manipulatoren vorgesehen sein, so dass beide Manipulatoren an beiden Magazine und an beiden Arbeitsspindeln Spann- und Aufnahmemittel zuführen bzw. wechseln können.

Vorteilhafterweise kann die erfindungsgemäße Werkzeugmaschine dadurch weitergebildet werden, dass die beiden Arbeitsspindeln dazu eingerichtet sind, sowohl ein Aufnahmemittel zum Aufnehmen eines Werkzeugs als auch ein Spannmittel zum Einspannen eines Werkstücks zu tragen.

Durch die Verwendung von beispielsweise standardisierten Aufnahmen (z.B. einem Hohlschaftkegel, Steilkegel, etc.) ist es möglich, dass die Arbeitsspindeln verschiedenste Aufnahme- und Spannmittel für entsprechend verschiedenste Werkzeuge und Werkstücke tragen können, was die Flexibilität der Werkzeugmaschine zusätzlich erhöht.

Weiterhin kann die erfindungsgemäße Werkzeugmaschine dadurch vorteilhaft weitergebildet werden, dass eine erste der beiden Arbeitsspindeln um eine erste Rotationsachse und entlang einer ersten Linearachse relativ zu der zweiten der beiden Arbeitsspindeln positioniert werden kann, und die zweite Arbeitsspindel um eine zweite Rotationsache, die parallel zu der ersten Rotationsachse verläuft, und entlang einer zweiten und einer dritten Linearachse, die sowohl senkrecht zueinander als auch senkrecht zu der ersten Linearachse verlaufen, positioniert werden kann.

Durch die Aufteilung der numerisch steuerbaren Achsen in der beschriebenen Weise können die beiden Arbeitsspindeln vielfältig zueinander zugestellt werden, so dass auch komplexere Werkstücke in einer Aufspannung bearbeitet werden können. Ferner ergibt sich durch die parallel zueinander angeordneten Rotationsachsen der beiden Arbeitsspindeln, dass die Arbeitsspindeln für das Wechseln der Spann- und Aufnahmemittel so positioniert werden können, dass beispielsweise ein vorhandener Manipulator für den Wechsel des Spann- und Aufnahmemittels genutzt werden kann.

Insbesondere kann das Schwenken der Arbeitsspindeln zueinander in einer Ebene vorteilhaft sein, da hierdurch verschiedenste Aufteilungen des Gesamtwinkels auf die Arbeitsspindeln möglich sind. Zum Beispiel kann ein (Schwenk-)Winkel von 90° zwischen den Arbeitsspindeln durch 2 x 45°-Bewegungen über die Rotationsachsen der jeweiligen Arbeitsspindel erzeugt werden, oder aber auch eine Aufteilung von 30°/60° oder 20°/70°.

Dadurch ist es möglich, die Bearbeitungsmöglichkeiten zu erweitern und dabei gleichzeitig die Schwenkzeit einer jeden Arbeitsspindel zu verkürzen, da, beispielsweise, ein Schwenken von 2 x 45 ° deutlich schneller erfolgen kann als ein Schwenken von 1 x 90 °. Hierdurch würde sich die Bearbeitungszeit von komplexeren Werkstücken zusätzlich verkürzen.

Weiterhin kann die erfindungsgemäße Werkzeugmaschine dadurch vorteilhaft weitergebildet werden, dass beide Arbeitsspindeln dazu eingerichtet sind, eine Grundstellung einzunehmen, in der die Spindelachsen in einer Ebene liegen, wobei aus der Grundstellung heraus eine koaxiale Anordnung der beiden Arbeitsspindeln erzeugt werden kann, indem die Arbeitsspindeln nur durch eine Drehbewegung um eine jeweilige Rotationsachse senkrecht zu der Ebene zueinander zugestellt werden.

Durch die Möglichkeit, die Arbeitsspindeln koaxial ausrichten zu können, kann das Werkstück direkt zwischen den Arbeitsspindeln übergeben werden, ohne eine zusätzliche Zuführeinrichtung für das Übergeben des Werkstücks vorsehen zu müssen.

Ferner könnte es vorteilhaft sein, dass zumindest eine, bevorzugt alle Arbeitsspindeln zwischen einer Position im Arbeitsraum der Werkzeugmaschine und einer Wechselposition außerhalb des Arbeitsraumes der Werkzeugmaschine geschwenkt werden können.

Dies hätte den Vorteil, dass ein Wechsel von entsprechenden Spann- und/oder Aufnahmemitteln zügiger erfolgen kann, da so der Zustellweg für den Manipulator reduziert wird bzw. die Zustellung des Manipulators und das Schwenken der Arbeitsspindeln gleichzeitig erfolgen könnte, was zusätzlich die Bearbeitungszeit von z.B. komplexeren Werkstücken weiter reduziert.

Die erfindungsgemäße Werkzeugmaschine kann dadurch vorteilhaft weitergebildet werden, dass die Magazine als Radmagazine und die Manipulatoren als Doppelgreifer ausgebildet sind.

Dies kann insbesondere dann vorteilhaft sein, wenn bei einem Austausch- bzw. Wechselvorgang der Spann- und/oder Aufnahmemittel an den Arbeitsspindeln, bei dem ein oder mehr Manipulatoren aktiv verwendet werden, die Spindelachsen parallel zueinander und parallel zu dem einzuwechselnden bzw. einzutauschenden Spann- und/oder Aufnahmemittel des entsprechenden Radmagazins ausgerichtet sind.

Hierdurch kann der Wechsel- bzw. Austauschvorgang sehr schnell stattfinden, da der Manipulator nur eine geringe Anzahl an Verfahrwegen und Zustellbewegungen benötigt, um von der Stelle, an der er das einzuwechselnde Spann- oder Aufnahmemittel aufgenommen hat, zu dem Spindelkopf zu gelangen, um dort entsprechend das Spann- oder Aufnahmemittel zu tauschen.

Dies wird zusätzlich durch die Ausbildung des Magazins als Radmagazin unterstützt, da das einzuwechselnde Spann- oder Aufnahmemittel von dem Radmagazin immer genau an die gleiche Übergabeposition gebracht werden kann, ohne dabei einen zusätzlichen Manipulator bzw. eine zusätzliche Zuführeinrichtung einsetzen zu müssen, wie dies bei Regalmagazinen typisch ist. Sie benötigen konstruktionsbedingt immer eine zusätzliche Einrichtung, die das Spann- oder Aufnahmemittel aus dem Magazin an die Übergabeposition transportiert.

Wird das Radmagazin zudem derart in der Werkzeugmaschine angeordnet, dass das einzuwechselnde Spann- oder Aufnahmemittel an der Übergabeposition zum Manipulator bzw. Doppelgreifer nicht nur parallel, sondern sich auch in der gleichen horizontalen Ebene wie das Spann- oder Aufnahmemittel der entsprechenden Arbeitsspindel befindet, so können weitere Verfahrwege und Zustellbewegungen des Manipulators/Doppelgreifers vermieden werden und somit Wechsel- bzw. Austauschvorgänge effizienter ablaufen.

Die erfindungsgemäße Werkzeugmaschine kann dadurch vorteilhaft weitergebildet werden, dass die Spindelachse der Arbeitsspindeln horizontal angeordnet ist.

Weiterhin kann die erfindungsgemäße Werkzeugmaschine dadurch vorteilhaft weitergebildet werden, dass eine erste der beiden Arbeitsspindeln an einer Konsole an dem Maschinenbett angeordnet ist und die zweite der beiden Arbeitsspindeln auf einem Kreuztisch geführt auf dem Maschinenbett angeordnet ist.

Dabei ist die genannte Anordnung der Arbeitsspindeln nur ein Beispiel und ist nicht darauf beschränkt. Die Arbeitsspindeln können sowohl in ihrer Ausrichtung horizontal oder vertikal ausgerichtet sein bzw. von einer horizontalen Ausrichtung in eine vertikale überführbar sein. Zudem können die Arbeitsspindeln in einer anderen Bauform einer Werkzeugmaschine (z.B. einer Konsolständerbauweise, Kreuztischbauweise, Kreuzbettbauweise oder Fahrständerbauweise) angeordnet werden.

Weiterhin kann es sein, dass das Spannmittel ein Außenspannmittel oder ein Innenspannmittel ist.

Durch die Anwendung von sowohl innenspannenden als auch außenspannenden Spannmitteln kann ein breites Spektrum von Werkstücken von den Arbeitsspindeln aufgenommen und bearbeitet werden.

Das erfindungsgemäße Verfahren zum zerspanenden Bearbeiten eines Werkstücks mittels eines Werkzeugs in einer erfindungsgemäßen Werkzeugmaschine weist folgende Schritte auf: Einspannen des Werkstücks in einem Spannmittel, das an einer ersten Arbeitsspindel montiert ist, Aufnehmen des Werkzeugs in einem Aufnahmemittel, das an einer zweiten Arbeitsspindel montiert ist, Bearbeiten einer ersten Seite des Werkstücks mittels des Werkzeugs nach Maßgabe eines NC-Programms.

Durch das erfindungsgemäße Verfahren können nun die Werkstücke, die sowohl drehend als auch fräsend zu bearbeiten sind, effektiver bearbeitet werden, da nicht nur das Werkzeug und/oder das Werkstück sowohl festgehalten als auch drehend angetrieben werden kann, es kann zudem ein schneller Wechsel des Werkzeugs stattfinden und aber auch das Werkstück von einer Arbeitsspindel zur anderen übergeben werden, so dass auch die bis dahin eingespannte Seite des Werkstücks bearbeitet werden kann, ohne dass dabei ein händisches Umspannen erfolgen muss.

Das erfindungsgemäße Verfahren kann durch folgenden Schritt vorteilhaft weitergebildet werden: Auswechseln des werkzeugtragenden Aufnahmemittels der zweiten Arbeitsspindel und Einwechseln eines nicht werkstücktragenden Spannmittels.

Hierdurch wird ermöglicht, dass eine Übergabe des Werkstücks von dem Spannmittel der einen Arbeitsspindel an das Spannmittel der anderen Arbeitsspindel stattfinden kann. Dabei können verschiedenartige Spannmittel verwendet werden, wie z.B. Spann- oder Backenfutter, innenspannende oder außenspannende Spannmittel etc. Vorteilhafterweise kann für den Auswechselprozess ein Manipulator, zum Beispiel in Form eines Doppelgreifers oder ähnlichem, verwendet werden, um das Auswechseln entsprechend schnell und automatisiert erfolgen zu lassen.

Das erfindungsgemäße Verfahren kann durch folgenden Schritt vorteilhaft weitergebildet werden: Übergeben des Werkstücks von dem werkstücktragenden Spannmittel der ersten Arbeitsspindel an das nicht werkstücktragende Spannmittel der zweiten Arbeitsspindel.

Durch die Möglichkeit, das Werkstück zwischen den Arbeitsspindeln zu übergeben, kann innerhalb eines Bearbeitungszyklus das Werkstück von einer Arbeitsspindel auf die andere und wieder zurück übergeben werden. Hierdurch ist es möglich, die Werkzeugmaschine mit überaus effektiven Bearbeitungsprogrammen so zu programmieren, dass eine Bearbeitung des Werkstücks von allen Seiten oder in kürzerer Zeit möglich ist, da z.B. ein händisches Umspannen nicht mehr nötig ist. Vorteilhafterweise kann auch für den Übergabeprozess ein Manipulator, zum Beispiel in Form eines Doppelgreifers oder ähnlichem, verwendet werden, um die Übergabe entsprechend schnell und automatisiert erfolgen zu lassen.

Zudem kann das erfindungsgemäße Verfahren durch folgende Schritte vorteilhaft weitergebildet werden: Auswechseln des nicht werkstücktragenden Spannmittels der ersten Arbeitsspindel und Einwechseln eines werkzeugtragenden Aufnahmemittels, und Bearbeiten einer zweiten Seite des Werkstücks, die der bereits bearbeiteten ersten Seite des Werkstücks gegenüberliegt, durch das Werkzeug, das in dem Aufnahmemittel der ersten Arbeitsspindel aufgenommen ist, nach Maßgabe des NC-Programms.

Hierdurch kann nun die Seite des Werkstücks bearbeitet werden, die während der Bearbeitung der anderen Seiten des Werkstücks als Einspannseite gedient hat. Dadurch kann ein Werkstück allseitig bearbeitet werden, ohne dass ein händisches Umspannen des Werkstücks erfolgen muss, was gegebenenfalls zum Verlust der Bezugspunkte der Werkzeugmaschine auf dem Werkstück führen und dadurch eine Neueinrichtung der Werkzeugmaschine nötig machen könnte.

Das erfindungsgemäße Verfahren kann dadurch vorteilhaft weitergebildet werden, dass die beiden Arbeitsspindeln vor der Übergabe des Werkstücks von der ersten Arbeitsspindel an die zweite Arbeitsspindel eine koaxiale Anordnung zueinander einnehmen.

Das vorherige Einnehmen einer koaxialen Ausrichtung der Arbeitsspindeln zueinander kann dabei eine Voraussetzung für die direkte Übergabe des Werkstücks zwischen den Arbeitsspindeln sein. Dies kann beispielsweise dann nötig werden, wenn ein Drehteil auf die andere Arbeitsspindel umgespannt werden muss, um das Drehteil von der bis dahin eingespannten Seite zu bearbeiten.

Das erfindungsgemäße Verfahren kann dadurch vorteilhaft weitergebildet werden, dass vor dem Einnehmen der koaxialen Anordnung der beiden Arbeitsspindeln folgende Schritte durchgeführt werden: Einnehmen einer Grundstellung, in der die Spindelachsen in einer Ebene liegen, und Drehen der Arbeitsspindeln um eine jeweilige Rotationsachse senkrecht zu der Ebene, bis zur koaxialen Ausrichtung der Spindelachsen der beiden Arbeitsspindeln.

Die Grundstellung der Arbeitsspindeln kann zudem dafür verwendet werden, die Spann- und Aufnahmemittel an den Arbeitsspindeln auszuwechseln (z.B. mittels eines Manipulators/Doppelgreifers). Dies kann insbesondere dann effektiv stattfinden, wenn die Spann- und Aufnahmemittel der Arbeitsspindeln dabei parallel zu den einzuwechselnden Spann- und Aufnahmemitteln des entsprechenden Magazins (z.B. Radmagazins) positioniert sind.

Das erfindungsgemäße Verfahren kann dadurch vorteilhaft weitergebildet werden, dass die Übergabe des Werkstücks von der ersten Arbeitsspindel an die zweite Arbeitsspindel derart erfolgt, dass während der Übergabe beide Arbeitsspindeln in Kontakt mit dem Werkstück sind.

Durch die Möglichkeit, das Werkstück direkt zwischen den Spindeln zu übergeben, kann eine schnellere Übergabe des Werkstücks ermöglicht werden und eine zusätzliche Übergabeeinrichtung entfallen.

Weiterhin kann es sein, dass die Übergabe des Werkstücks von der ersten Arbeitsspindel an die zweite Arbeitsspindel mittels eines Manipulators erfolgt.

Jedoch können für die Übergabe des Werkstücks zwischen den Spindeln auch entsprechende Übergabeeinrichtungen oder Zuführeinrichtungen vorgesehen sein, wie z.B. in Form eines Doppelgreifers oder ähnlichem.

### KURZBESCHREIBUNG DER FIGUREN

- Fig. 1: zeigt schematisch eine Werkzeugmaschine gemäß eines Ausführungsbeispiels, das nicht in den Schutzbereich der vorliegenden Ansprüche fällt, mit Maschinenbett sowie den darauf angebrachten Arbeitsspindeln, die entsprechend der dargestellten drei Linearachsen und zwei Rotationsachsen zueinander zugestellt werden können;
- Fig. 2: zeigt schematisch die Werkzeugmaschine in einem weiteren Ausführungsbeispiel mit zwei Radmagazinen und zwei Doppelgreifern, wobei auf dem Maschinenbett der Werkzeugmaschine die Arbeitsspindeln angebracht sind, die entsprechend der numerisch steuerbaren Achsen aus Fig. 1 zueinander zugestellt werden können;
- Fig. 3: zeigt schematisch die Werkzeugmaschine mit zwei Radmagazinen und zwei Doppelgreifern in einer Grundstellung der Arbeitsspindeln;
- Fig. 4: zeigt schematisch die Übergabe eines Werkstücks zwischen einer ersten Arbeitsspindel und einer zweiten Arbeitsspindel nach einem Ausführungsbeispiels des erfindungsgemäßen Verfahrens;
- Fig. 5: zeigt ein Ablaufdiagramm eines Ausführungsbeispiels des erfindungsgemäßen Verfahrens.

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben.

Es sei hervorgehoben, dass die vorliegende Erfindungjedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

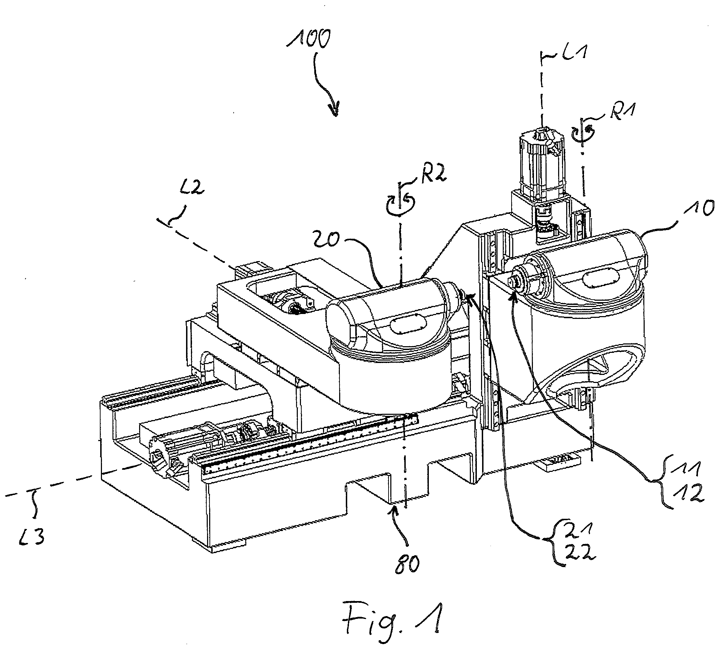

Fig. 1 zeigt schematisch die Werkzeugmaschine 100 mit Maschinenbett 80 sowie den darauf angebrachten Arbeitsspindeln 10 und 20, die entsprechend der dargestellten drei Linearachsen L1, L2 und L3 und zwei Rotationsachsen R1 und R2 zueinander zugestellt werden können.

Dabei handelt es sich in dieser Ausführungsform um eine nicht in den Schutzbereich der vorliegenden Ansprüche fallende Werkzeugmaschine 100, bei der sowohl die erste Arbeitsspindel 10 als auch die zweite Arbeitsspindel 20 in einer Art Konsolbauweise an dem Maschinenbett 80 angebracht sind. Es sei jedoch an dieser Stelle darauf verwiesen, dass die erfindungsgemäße Werkzeugmaschine nicht auf die beschriebene Bauform beschränkt ist. Vielmehr können Konsolbauformen und Kreuztischbauformen, wie aber auch Ständerbauformen oder dergleichen ebenso wie verschiedenste Kombinationen der genannten Bauformen Anwendung finden.

Die Aufteilung der numerisch steuerbaren Achsen der Werkzeugmaschine 100 nach Fig. 1 ist derart, dass die erste Arbeitsspindel 10 vertikal entlang der Linearachse L1 verfahren und um die Rotationsachse R1, die parallel zur Linearachse L1 ist, gedreht werden kann. Die zweite Arbeitsspindel 20 kann mittels den Linearachsen L2 und L3 horizontal in einer Ebene zugestellt werden, wobei die Linearachse L3 die Zustellung der zweiten Arbeitsspindel 20 in Richtung der ersten Arbeitsspindel 10 vornimmt und L2 die Zustellung senkrecht zu den Linearachsen L1 und L3 vornimmt. Die Rotationsachse R2, um die sich die zweite Arbeitsspindel 20 drehen kann, ist dabei wieder parallel zur Rotationsachse R1 der ersten Arbeitsspindel 10.

Der Vorteil dieses Aufbaus besteht nun darin, dass auf einen Maschinentisch gänzlich verzichtet werden konnte, und somit eine Festhaltung des Werkstücks vorliegt, die ebenso mit einer hohen, teils sehr hohen Drehzahl belegt werden kann, um von einer fräsenden Bearbeitung zu einer Drehbearbeitung in kürzester Zeit zu wechseln.

Es sei an dieser Stelle darauf hingewiesen, dass neben den beiden Arbeitsspindeln sehr wohl auch noch ein Maschinentisch vorhanden sein kann, oder eine der beiden Arbeitsspindeln ist eine transportable Arbeitsspindel, die auf dem Maschinentisch montiert wurde/werden kann. Dadurch könnten auch bereits bestehende Werkzeugmaschinen auf ein Doppel-Spindel-System umgerüstet werden.

Zudem zeigt Fig. 1 die beiden Arbeitsspindeln 10 und 20 in koaxialer Ausrichtung zueinander. Dies kann nicht nur für die Bearbeitung des Werkstücks 12 erheblich sein, sondern auch für eine Übergabe des Werkstücks 12 zwischen den Arbeitsspindeln 10 und 20. Hierbei kann das Werkstück 12, das in einem Spannmittel 11 der ersten Arbeitsspindel 10 eingespannt ist, an ein Spannmittel 11 der zweiten Arbeitsspindel 20 übergeben werden, indem die zweite Arbeitsspindel 20 in der Ebene der Linearachsen L2 und L3 relativ zu der ersten Arbeitsspindel 10 zugestellt wird. Kommen nun klassische Spannmittel wie Spannfutter oder Backenfutter zum Einsatz, kann die koaxiale Ausrichtung der beiden Arbeitsspindeln im Voraus der Zustellbewegung der Arbeitsspindeln zueinander erforderlich sein.

Fig. 1 zeigt im konkreten Fall die koaxiale Ausrichtung der beiden Arbeitsspindeln 10 und 20 mit einem Spannmittel 11 und einem Werkstück 12 an der ersten Arbeitsspindel 10 und ein Aufnahmemittel 21 mit einem Werkzeug 22 an der zweiten Arbeitsspindel 20.

Zudem ist es durch den Aufbau der Werkzeugmaschine 100 und der Aufteilung der Zustellachsen L1, L2, L3, R1 und R2 insbesondere möglich, ein Schwenken der Arbeitsspindeln 10 und 20 zueinander in einer Ebene zu erzeugen. Hierdurch können verschiedenste Aufteilungen von einzelnen Schwenkbewegungen der Arbeitsspindeln 10 und 20 erzeugt werden. Zum Beispiel kann ein (Schwenk-)Winkel von 90° zwischen den Arbeitsspindeln 10 und 20 durch 2 x 45°-Bewegungen um die entsprechenden Rotationsachsen R1 und R2 erzeugt werden, oder aber auch durch eine Aufteilung der einzelnen Schwenkbewegungen von z.B. 30°/60° oder 20°/70°.

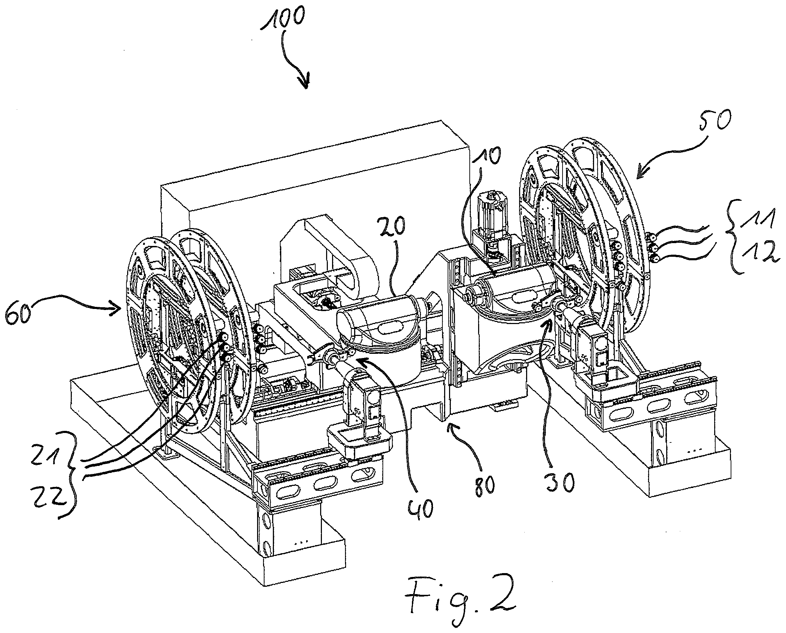

Fig. 2 zeigt schematisch die Werkzeugmaschine 100 in einem weiteren Ausführungsbeispiel mit zwei Radmagazinen 50 und 60 und zwei Doppelgreifer 30 und 40, wobei auf dem Maschinenbett 80 der Werkzeugmaschine 100 die Arbeitsspindeln 10 und 20 angebracht sind, die entsprechend der numerisch steuerbaren Achsen aus Fig. 1 zueinander zugestellt werden können.

Die Erweiterung der Werkzeugmaschine 100 liegt nun in den Radmagazinen 50 und 60 für das Aufbewahren und Ablegen von werkzeugtragenden und nicht werkzeugtragenden Aufnahmemitteln 21 und werkstücktragenden und nicht werkstücktragenden Spannmitteln 11, wobei die Arbeitsspindeln 10 und 20 und der entsprechende Arbeitsraum zwischen den Radmagazinen 50 und 60 angeordnet sind. Zudem unterscheidet sich die Werkzeugmaschine 100 darin, dass sie mit Doppelgreifern 30 und 40 als Manipulatoren ausgestattet ist, um entsprechend die Spann- und Aufnahmemittel 11 und 21 zwischen den Radmagazinen 50 und 60 und den Arbeitsspindeln 10 und 20 zu wechseln und zu transportieren.

Dies begünstigt maßgeblich einen weitestgehend automatisierten Bearbeitungsprozess von Werkstücken 12, da beispielsweise das Rohteil des Werkstücks 12 in einem der an den Seiten des Arbeitsraumes angeordneten Radmagazine 50 und 60 abgelegt oder aus einem der Radmagazine 50 und 60 entnommen werden kann. Zusätzlich kann natürlich auch das fertig bearbeitete Werkstück 12 wieder den Radmagazinen 50 und 60 zugeführt oder entnommen werden. Die Zwischenschritte bei der Bearbeitung des entsprechenden Werkstücks 12 könnten vollautomatisiert erfolgen und bedürften im Idealfall nur noch einer Überwachung, aber keinem händischen Eingreifen durch das Fachpersonal bzw. den Maschinenbediener.

Es sei an dieser Stelle darauf hingewiesen, dass die Doppelgreifer 30 und 40 nicht darauf beschränkt sind, nur jeweils mit einer Spindel 10 oder 20 und/oder einem Radmagazin 50 oder 60 zu interagieren. Im Gegenteil, die Werkzeugmaschine 100 kann beispielsweise derart ausgestaltet sein, dass die Doppelgreifer 30 und 40 beiden Doppelspindeln 10 und 20 und beiden Radmagazinen 50 und 60 entsprechende Spann- und Aufnahmemittel 11 und 21 zuführen können.

Ein weiterer Vorteil bei der gezeigten Ausgestaltung der Werkzeugmaschine 100 besteht in der Wahl der Magazine als Radmagazine 50 und 60 selbst. Sie sind in der Lage, Werkzeuge 22 und Werkstücke 12 verschiedener Größen durch die Spann- bzw. Aufnahmemittel 11 und 21 aufzubewahren und mittels einer Drehbewegung immer an die gleiche Übergabeposition zu bringen, an der ein Doppelgreifer 30 oder 40 oder ein anderer Werkzeug- bzw. Werkstückwechsler das entsprechende Spann- bzw. Aufnahmemittel 11 und 21 aufnehmen kann. Der große Vorteil z.B. im Vergleich zu Regallagern besteht darin, dass auf eine zusätzliche Zuführeinrichtung verzichtet werden kann, die erst das entsprechende Spann- oder Aufnahmemittel 11 oder 21 aus dem Regallager entnimmt und an die Übergabeposition des Doppelgreifers 30 oder 40 bringt, der das entsprechende Mittel aufnimmt und einer der Arbeitsspindeln 10 oder 20 zuführt.

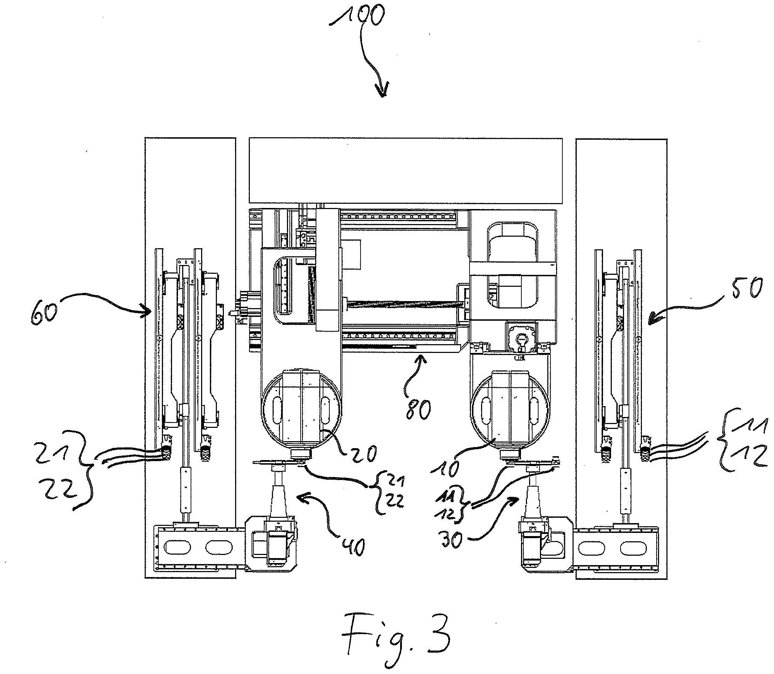

Fig. 3 zeigt schematisch die Werkzeugmaschine 100 mit zwei Radmagazinen 50 und 60 und zwei Doppelgreifern 30 und 40 in einer Grundstellung der Arbeitsspindeln 10 und 20.

Die dabei gezeigte Grundstellung ist gleichzeitig die Stellung der Arbeitsspindeln 10 und 20, wenn sie mit den Doppelgreifern 30 und 40 interagieren und ein Wechsel der Spann- oder Aufnahmemittel 11 oder 21 an der entsprechenden Arbeitsspindel 10 oder 20 stattfindet.

Vorteilhaft ist es, wenn in der gezeigten Grundstellung der Arbeitsspindeln 10 und 20 die einzuwechselnden Spann- und Aufnahmemittel 11 und 21, die in den Magazinen 50 und 60 lagern, an der Übergabeposition von Magazin zu Doppelgreifer parallel zu den Spann- und Aufnahmemitteln 11 und 21 positioniert sind, die von den Doppelgreifern 30 und 40 aus den Spindelköpfen der Arbeitsspindeln 10 und 20 entnommen werden. Dies begünstigt ein besonders schnelles Wechseln der Spann- und Aufnahmemittel 11 und 21, da die Doppelgreifer 30 und 40 geringere Verfahrwege zurücklegen müssen, um entsprechend die Spann- oder Aufnahmemittel 11 und 21 aus den Magazinen 50 und 60 zu entnehmen und den Arbeitsspindeln 10 und 20 zuzuführen, bzw. den Arbeitsspindel 10 und 20 zu entnehmen und den Magazinen 50 und 60 zuzuführen.

Ganz allgemein ist es aber durch den in den Figuren gezeigten Aufbau der Werkzeugmaschine 100 vorteilhaft möglich, die Arbeitsspindeln 10 und 20 zwischen einer Position im Arbeitsraum der Werkzeugmaschine 100 und einer Wechselposition (vergleiche z.B. Darstellung in Fig. 2 mit der Darstellung in Fig. 3) außerhalb des Arbeitsraumes der Werkzeugmaschine 100 zu schwenken.

Es ist weiterhin von Vorteil, wenn die einzuwechselnden Spann- und Aufnahmemittel 11 und 21, die in den Magazinen 50 und 60 lagern, an der Übergabeposition von Magazin zu Doppelgreifer zudem in der gleichen horizontalen Ebene liegen, in der sich die Spann- und Aufnahmemittel 11 und 21 befinden, wenn sie von den Doppelgreifern 30 und 40 aus den Spindelköpfen der Arbeitsspindeln 10 und 20 entnommen werden. Hierdurch können weitere Verfahrwege der Doppelgreifer 30 und 40 eingespart werden und der Prozess des Zuführens bzw. Wechsels der Spann- und Aufnahmemittel 11 und 21 schneller ausgeführt werden.

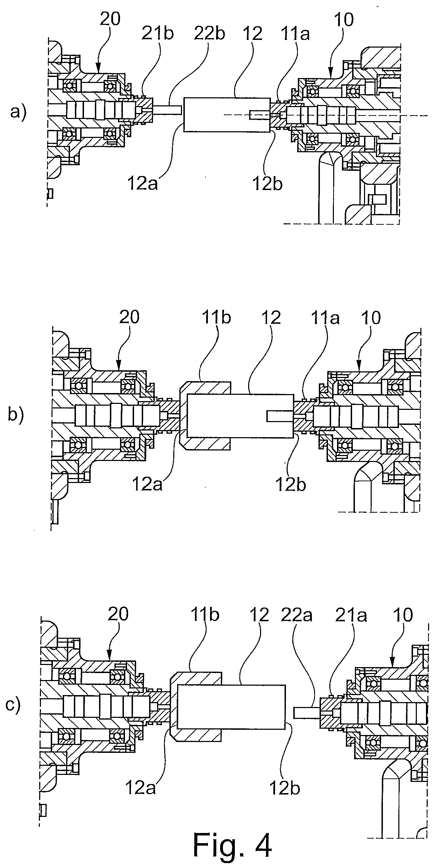

Fig. 4 zeigt schematisch die Übergabe eines Werkstücks 12 zwischen einer ersten Spindel 10 und einer zweiten Spindel 20 nach einem Ausführungsbeispiel des erfindungsgemäßen Verfahrens.

In Teilbild a) ist zu sehen, wie die erste Arbeitsspindel 10 ein Spannmittel 11a (in diesem Beispiel ein innenspannendes Spannmittel) hält, dass ein Werkstück 12 trägt, das an einer zweiten Seite 12b von dem Spannmittel 11a gehalten wird. Weiterhin ist die zweite Arbeitsspindel 20 gezeigt, die ein Aufnahmemittel 21b mit einem Werkzeug 22b hält.

Dabei kann dies eine Situation sein, in der das Werkzeug 22b das Werkstück 12 an einer ersten Seite 12a bearbeitet bzw. bearbeitet hat.

In Teilbild b) ist nun zu sehen, wie das Aufnahmemittel 21b mit dem Werkzeug 22b an der zweiten Arbeitsspindel 20 ausgetauscht wurde und dafür ein Spannmittel 11b (in diesem Beispiel ein außenspannendes Spannmittel) eingewechselt wurde. Dabei hält das Spannmittel 11b das Werkstück 12 von der ersten Seite 12a.

Es sei der Vollständigkeit halber darauf hingewiesen, dass das Halten des Werkstücks 12 von der ersten Seite 12a in dem gezeigten Beispiel nur dadurch möglich ist, da die Arbeitsspindeln 10 und 20 im Voraus eine koaxiale Ausrichtung zueinander eingenommen haben und die Zustellung der Arbeitsspindeln 10 und 20 zueinander entlang der gemeinsamen Spindelachsrichtung stattgefunden hat.

In Teilbild c) ist nun zu sehen, dass das Einspannmittel 11a an der ersten Arbeitsspindel gegen ein Aufnahmemittel 21a mit Werkzeug 22a eingetauscht wurde und nun die zweite Seite 12b des Werkstücks 12 mit dem Werkzeug 22a bearbeitet werden kann.

Durch den gezeigten und beschriebenen Übergabeprozess soll verdeutlicht werden, wie flexibel die beiden Arbeitsspindeln 10 und 20 miteinander interagieren können, um ein Werkstück 12 von allen Seiten bearbeiten zu können, ohne dass ein händisches Umspannen des Werkstücks 12 mit den bekannten Nachteilen erfolgen muss.

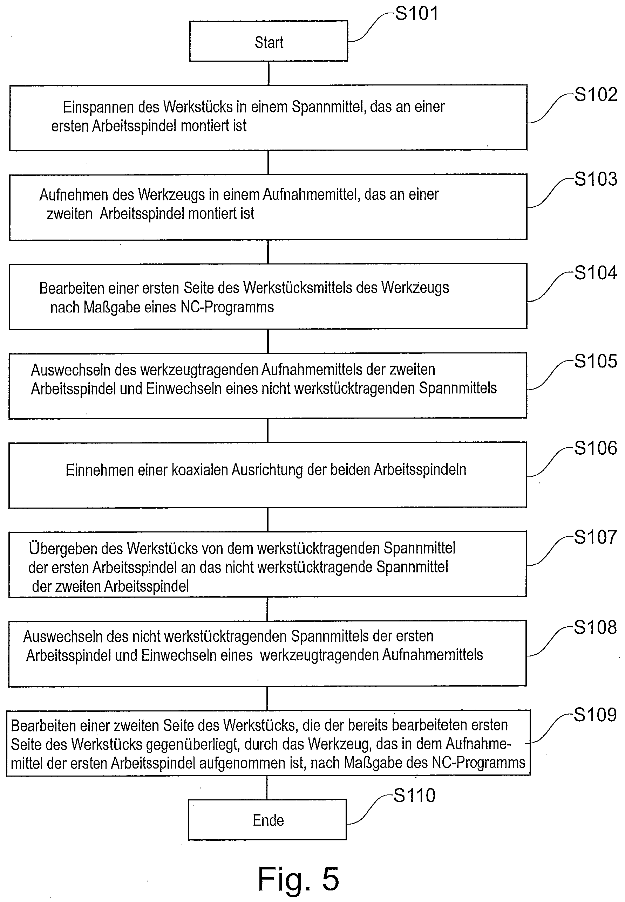

Fig. 5 zeigt ein Ablaufdiagramm eines Ausführungsbeispiels des erfindungsgemäßen Verfahrens. Unterstützend soll für die Beschreibung des Verfahrens zusätzlich Fig. 4 herangezogen werden.

In Schritt S102 wird das Werkstück 12 an einer zweiten Seite 12b in einem Spannmittel 11a eingespannt, das an einer ersten Arbeitsspindel 10 montiert ist. Dabei kann das Spannmittel beispielsweise ein innenspannendes Spannmittel (wie in Fig. 4 gezeigt) sein.

Im nächsten Schritt S103 wird ein Werkzeug 22b in ein Aufnahmemittel 21b aufgenommen, das an einer zweiten Arbeitsspindel 20 montiert ist. Beispielhaft für ein Werkzeug 22b kann (wie in Fig. 4 gezeigt) ein fräsendes Werkzeug, z.B. ein Schaftfräser, verwendet werden.

Im darauf folgenden Schritt S104 wird nun eine erste Seite 12a des Werkstücks 12 mittels des Werkzeugs 22b nach Maßgabe eines NC-Programms bearbeitet. Dabei können auch weiteren Seiten des Werkstücks 12 bearbeitet werden, wie zum Beispiel die Mantelfläche des Werkstücks 12, die sich zwischen der ersten Seite 12a und der zweiten Seite 12b befindet.

Nach erfolgter Bearbeitung der ersten Seite 12a des Werkstücks 12 durch das Werkzeug 22b erfolgt im Schritt S105 nun das Auswechseln des Aufnahmemittels 21b mit Werkzeug 22b der zweiten Arbeitsspindel 20 und Einwechseln eines nicht werkstücktragenden Spannmittels 11b z.B. mittels eines Manipulators, der beispielsweise als Doppelgreifer ausgebildet ist. Hierbei kann beispielsweise ein außenspannendes Spannmittel (wie in Fig. 4 gezeigt) verwendet werden.

Durch das Einwechseln des Spannmittels 11b kann nun grundsätzlich das Werkstück 12 durch das Spannmittel 11b gehalten werden. Um das Werkstück 12 aber dem Spannmittel 11b zuzuführen, muss im Schritt S106 eine koaxiale Ausrichtung der beiden Arbeitsspindeln 10 und 20 zueinander erfolgen. Dies stellt dabei einen überaus wichtigen Schritt dar, da ohne die koaxiale Ausrichtung der Arbeitsspindeln 10 und 20 in dem in Fig. 4 gezeigten Beispiel ein Übergeben des Werkstücks 12 nur bedingt möglich ist.

Es kann hilfsweise z.B. eine zusätzliche Zuführeinrichtung/Übergabeeinrichtung zwischen den Arbeitsspindeln 10 und 20 vorgesehen sein, die eine nicht koaxiale Ausrichtung der Arbeitsspindeln 10 und 20 ausgleicht, jedoch soll auf eine mögliche zusätzliche Zuführeinrichtung/Übergabeeinrichtung später eingegangen werden.

Ist die koaxiale Ausrichtung erfolgt, kann im folgenden Schritt S107 das Werkstück 12 von dem werkstücktragenden Spannmittel 11a der ersten Arbeitsspindel 10 an das nicht werkstücktragende Spannmittel 11b der zweiten Arbeitsspindel 20 übergeben werden, in dem die Arbeitsspindeln 10 und 20 entlang ihrer gemeinsamen, koaxial ausgerichteten Spindelachsrichtung zueinander zugestellt werden.

Im Anschluss daran kann das Spannmittel 11a der ersten Arbeitsspindel 10 zurückgezogen werden und im Schritt S108 ausgewechselt werden. Ein Aufnahmemittel 21a mit einem Werkzeug 22a (z.B. wieder ein Schaftfräser oder ähnliches) kann stattdessen eingewechselt werden, wie es in Fig. 4 gezeigt ist.

Nun kann mit dem eingewechselten Werkzeug 22a der ersten Arbeitsspindel 10 in einem darauf folgenden Schritt S109 die zweite Seite 12b des Werkstücks 12, die der bereits bearbeiteten ersten Seite 12a des Werkstücks 12 gegenüberliegt, nach Maßgabe des NC-Programms bearbeitet werden.

Anhand der Möglichkeit, ein Werkstück 12 innerhalb der Werkzeugmaschine 100 von einer Arbeitsspindel zur anderen zu übergeben, können Bearbeitungsprozesse weitestgehend vollautomatisch abgearbeitet werden. Weiterhin ist es überaus vorteilhaft, dass alle Seiten eines Werkstücks 12 in einem Bearbeitungsprozess bearbeitet werden können, ohne dass ein händisches Umspannen des Werkstücks 12 in der Werkzeugmaschine 100 durch einen Facharbeiter bzw. Maschinenbediener erfolgen muss. Dies spart Zeit und auch Bezugspunkte der Werkzeugmaschine 100 auf dem Werkstück 12 gehen dabei nicht verloren, so dass ein erneutes Einrichten der Werkzeugmaschine 100 ausbleiben kann.

Das Verfahren kann dahingehend erweitert werden, dass noch vor dem Schritt S106 (koaxiale Ausrichtung der Arbeitsspindeln 10 und 20 zueinander) die Arbeitsspindeln 10 und 20 eine Grundstellung einnehmen, in der die Spindelachsen der Arbeitsspindeln 10 und 20 in einer Ebene liegen, wie dies z.B. in Fig. 3 gezeigt ist. Hier ist die gezeigte Grundstellung gleichzeitig die Stellung, in der die Arbeitsspindeln 10 und 20 mit den Manipulatoren bzw. Doppelgreifern 30 und 40 interagieren können.

Aus der Grundstellung heraus können nun die Arbeitsspindeln 10 und 20 durch eine Drehbewegung um eine jeweilige Rotationsachse, die senkrecht zu der Ebene stehen, bis zur koaxialen Ausrichtung der Spindelachsen gedreht werden. Im Anschluss daran könnte nun das Verfahren bei Schritt S106 weitergeführt werden.

Bevorzugt kann in dem Verfahren die Übergabe des Werkstücks 12 von der ersten Arbeitsspindel 10 an die zweite Arbeitsspindel 20 derart erfolgen, dass während der Übergabe beide Arbeitsspindeln 10 und 20 gleichzeitig in Kontakt mit dem Werkstück 12 sind, wie dies in Fig. 4 beispielhaft gezeigt ist. Dies würde eine zusätzliche Zuführeinrichtung/Übergabeeinrichtung überflüssig machen.

Jedoch ist das Verfahren nicht darauf beschränkt. Vielmehr kann das Verfahren dahingehend erweitert werden, dass für die Übergabe des Werkstücks 12 von der ersten Arbeitsspindel 10 an die zweite Arbeitsspindel 20 eine zusätzliche Zuführeinrichtung/Übergabeeinrichtung, z.B. ein zusätzlicher Manipulator/Doppelgreifer, vorgesehen ist. Die zusätzliche Zuführeinrichtung/Übergabeeinrichtung könnte so ausgeführt sein, dass sie eine mögliche nicht koaxiale Ausrichtung der Arbeitsspindeln 10 und 20 zueinander beim Übergeben des Werkstücks 12 von der einen Arbeitsspindel an die andere ausgleicht.

Es kann jedoch auch vorteilhaft sein, wenn ein in der Werkzeugmaschine 100 bereits vorhandener Manipulator bzw. Doppelgreifer 30 oder 40 (siehe z.B. Figs. 2 und 3) derart eingerichtet ist, dass er neben der Interaktion von Magazin 50 oder 60 und Arbeitsspindel 10 oder 20 auch zwischen den beiden Arbeitsspindeln 10 und 20 agieren kann.

Auch dies würde eine zusätzliche Zuführeinrichtung/Übergabeeinrichtung überflüssig machen und die Flexibilität der Werkzeugmaschine 100 erhöhen.

Vorstehend wurden Beispiele bzw. Ausführungsbeispiele der vorliegenden Erfindung sowie deren Vorteile detailliert unter Bezugnahme auf die beigefügten Figuren beschrieben.

### LISTE DER BEZUGSZEICHEN

- **10**: erste Arbeitsspindel
- **11, 11a, 11b**: Spannmittel
- **12**: Werkstück
- **12a**: erste Seite des Werkstücks
- **12b**: zweite Seite des Werkstücks
- **20**: zweite Arbeitsspindel
- **21, 21a, 21b**: Aufnahmemittel
- **22, 22a, 22b**: Werkzeug
- **30,40**: Manipulator/ Doppelgreifer
- **50, 60**: Magazin / Radmagazin
- **80**: Maschinenbett
- **100**: Werkzeugmaschine

## Patentansprüche

1. Werkzeugmaschine (100) zum zerspanenden Bearbeiten eines Werkstücks (12) mittels eines Werkzeugs (22), wobei die Werkzeugmaschine (100) ein Spannmittel (11) zum Einspannen des Werkstücks (12) und ein Aufnahmemittel (21) zum Aufnehmen des Werkzeugs (22) umfasst,
wobei das Spannmittel (11) an einem Spindelkopf einer spannmitteltragenden Arbeitsspindel (10) montiert ist und das Aufnahmemittel (21) an einem Spindelkopf einer aufnahmemitteltragenden Arbeitsspindel (20) montiert ist, und
wobei die Werkzeugmaschine (100) dazu eingerichtet ist, die beiden Arbeitsspindeln (10, 20) mittels numerisch steuerbarer Achsen relativ zueinander derart zu positionieren, dass das in dem Spannmittel (11) eingespannte Werkstück (12) durch das in dem Aufnahmemittel (21) aufgenommene Werkzeug (22) bearbeitet werden kann, und
die beiden Arbeitsspindeln (10, 20) jeweils durch mindestens eine Rotationsachse (R1, R2) und mindestens eine Linearachse (L1, L2, L3) zueinander zustellbar sind,
**gekennzeichnet, durch**
zwei Magazine (50, 60), die jeweils zur Ablage von werkstücktragenden und nicht werkstücktragenden Spannmitteln (11) sowie zur Ablage von werkzeugtragenden und nicht werkzeugtragenden Aufnahmemitteln (21) eingerichtet sind,
wobei die Werkzeugmaschine (100) ferner zwei Manipulatoren (30, 40) aufweist, die zum Ein- und Auswechseln von werkstücktragenden und/oder nicht werkstücktragenden Spannmitteln (11) und werkzeugtragenden und/oder nicht werkzeugtragenden Aufnahmemitteln (21) an den Arbeitsspindeln (10, 20) eingerichtet sind, und
wobei jeder der beiden Arbeitsspindeln (10, 20) zumindest eines der beiden Magazine (50, 60) zugewiesen ist und jeweils einer der beiden Manipulatoren (30, 40) zwischen einer der beiden Arbeitsspindeln (10, 20) und deren zugewiesenem Magazin (50, 60) agiert.

2. Werkzeugmaschine (100) nach Anspruch 1, **dadurch gekennzeichnet, dass** die zwei Magazine (50, 60) voneinander beabstandet angeordnet sind.

3. Werkzeugmaschine (100) nach Anspruch 2, **dadurch gekennzeichnet, dass** die zwei Magazine (50, 60) derart an Seiten eines Arbeitsraums der Werkzeugmaschine (100) angeordnet sind, dass der Arbeitsraum der Werkzeugmaschine (100) zwischen den zwei Magazinen (50, 60) angeordnet ist.

4. Werkzeugmaschine (100) nach einem der Ansprüche 1 bis 3, **dadurch gekennzeichnet, dass** die beiden Arbeitsspindeln (10, 20) dazu eingerichtet sind, sowohl ein Aufnahmemittel (21) zum Aufnehmen eines Werkzeugs (22) als auch ein Spannmittel (11) zum Einspannen eines Werkstücks (12) zu tragen.

5. Werkzeugmaschine (100) nach einem der Ansprüche 1 bis 3, **dadurch gekennzeichnet, dass** eine erste (10) der beiden Arbeitsspindeln (10, 20) um eine erste Rotationsachse (R1) und entlang einer ersten Linearachse (L1) relativ zu der zweiten (20) der beiden Arbeitsspindeln (10, 20) positioniert werden kann, und die zweite Arbeitsspindel (20) um eine zweite Rotationsache (R2), die parallel zu der ersten Rotationsachse (R1) verläuft, und entlang einer zweiten und einer dritten Linearachse (L2, L3), die sowohl senkrecht zueinander als auch senkrecht zu der ersten Linearachse (L1) verlaufen, positioniert werden kann.

6. Werkzeugmaschine (100) nach einem der vorherigen Ansprüche, **dadurch gekennzeichnet, dass** beide Arbeitsspindeln (10, 20) dazu eingerichtet sind, eine Grundstellung einzunehmen, in der die Spindelachsen in einer Ebene liegen, wobei aus der Grundstellung heraus eine koaxiale Anordnung der beiden Arbeitsspindeln (10, 20) erzeugt werden kann, indem die Arbeitsspindeln (10, 20) nur durch eine Drehbewegung um eine jeweilige Rotationsachse (R1, R2) senkrecht zu der Ebene zueinander zugestellt werden.

7. Werkzeugmaschine (100) nach einem der vorherigen Ansprüche, **dadurch gekennzeichnet, dass** die Magazine (50, 60) als Radmagazine und die Manipulatoren (30, 40) als Doppelgreifer ausgebildet sind.

8. Werkzeugmaschine (100) nach einem der vorherigen Ansprüche, **dadurch gekennzeichnet, dass** die Spindelachse der Arbeitsspindeln (10, 20) horizontal angeordnet ist, und
dass eine erste (10) der beiden Arbeitsspindeln (10, 20) an einer Konsole an dem Maschinenbett (80) angeordnet ist und die zweite (20) der beiden Arbeitsspindeln (10, 20) auf einem Kreuztisch geführt auf dem Maschinenbett (80) angeordnet ist.

9. Verfahren zum zerspanenden Bearbeiten eines Werkstücks (12) mittels eines Werkzeugs (22, 22a, 22b) in einer Werkzeugmaschine (100) nach einem der Ansprüche 1 bis 8, wobei das Verfahren folgende Schritte aufweist:
- Einspannen des Werkstücks (12) in einem Spannmittel (11a), das an einer ersten Arbeitsspindel (10) montiert ist,
- Aufnehmen des Werkzeugs (22b) in einem Aufnahmemittel (21b), das an einer zweiten Arbeitsspindel (20) montiert ist,
- Bearbeiten einer ersten Seite (12a) des Werkstücks (12) mittels des Werkzeugs (22b) nach Maßgabe eines NC-Programms.

10. Verfahren nach Anspruch 9, **gekennzeichnet durch** folgenden Schritt:
- Auswechseln des werkzeugtragenden Aufnahmemittels (21b) der zweiten Arbeitsspindel (20) und Einwechseln eines nicht werkstücktragenden Spannmittels (11b),
- Übergeben des Werkstücks von dem werkstücktragenden Spannmittel (11a) der ersten Arbeitsspindel (10) an das nicht werkstücktragende Spannmittel (11b) der zweiten Arbeitsspindel (20).

11. Verfahren nach Anspruch 10, **gekennzeichnet durch** die folgenden Schritte:
- Auswechseln des nicht werkstücktragenden Spannmittels (11a) der ersten Arbeitsspindel (10) und Einwechseln eines werkzeugtragenden Aufnahmemittels (21a),
- Bearbeiten einer zweiten Seite (12b) des Werkstücks (12), die der bereits bearbeiteten ersten Seite (12a) des Werkstücks (12) gegenüberliegt, durch das Werkzeug (22a), das in dem Aufnahmemittel (21a) der ersten Arbeitsspindel (10) aufgenommen ist, nach Maßgabe des NC-Programms.

12. Verfahren nach Anspruch 10, **dadurch gekennzeichnet, dass** die beiden Arbeitsspindeln (10, 20) vor der Übergabe des Werkstücks (12) von der ersten Arbeitsspindel (10) an die zweite Arbeitsspindel (20) eine koaxiale Anordnung zueinander einnehmen.

13. Verfahren nach Anspruch 12, **dadurch gekennzeichnet, dass** vor dem Einnehmen der koaxialen Anordnung der beiden Arbeitsspindeln (10, 20) folgende Schritte durchgeführt werden:
- Einnehmen einer Grundstellung, in der die Spindelachsen in einer Ebene liegen, und
- Drehen einer der beiden Arbeitsspindeln (10, 20) um eine Rotationsachse (R1, R2) senkrecht zu der Ebene, bis zur koaxialen Ausrichtung der Spindelachsen der beiden Arbeitsspindeln (10, 20).

14. Verfahren nach einem der Ansprüche 10 bis 13, **dadurch gekennzeichnet, dass** die Übergabe des Werkstücks (12) von der ersten Arbeitsspindel (10) an die zweite Arbeitsspindel (20) derart erfolgt, dass während der Übergabe beide Arbeitsspindeln (10, 20) in Kontakt mit dem Werkstück (12) sind.

## Claims

1. Machine tool (100) for machining a workpiece (12) by means of a tool (22), wherein the machine tool (100) comprises a clamping means (11) for clamping the workpiece (12) and a receiving means (21) for receiving the tool (22),
wherein the clamping means (11) is mounted on a spindle head of a work spindle (10) carrying the clamping means and the receiving means (21) is mounted on a spindle head of a work spindle (20) carrying the receiving means, and
wherein the machine tool (100) is configured to position the two work spindles (10, 20) relative to one another by means of numerically controllable axes such that the workpiece (12) clamped in the clamping means (11) can be machined by the tool (22) received in the receiving means (21), and
the two work spindles (10, 20) can each be fed to one another by at least one axis of rotation (R1, R2) and at least one linear axis (L1, L2, L3),
**characterised by**
two magazines (50, 60) which are each configured to store workpiece-carrying and non-workpiece-carrying clamping means (11) and to store tool-carrying and non-tool-carrying receiving means (21),
wherein the machine tool (100) further comprises two manipulators (30, 40) which are configured to exchange workpiece-carrying and/or non-workpiece-carrying clamping means (11) and tool-carrying and/or non-tool-carrying receiving means (21) on the work spindles (10, 20), and
wherein at least one of the two magazines (50, 60) is assigned to each of the two work spindles (10, 20) and in each case one of the two manipulators (30, 40) acts between one of the two work spindles (10, 20) and the assigned magazine (50, 60) thereof.

2. Machine tool (100) according to claim 1, **characterised in that** the two magazines (50, 60) are arranged spaced apart from one another.

3. Machine tool (100) according to claim 2, **characterised in that** the two magazines (50, 60) are arranged on sides of a working space of the machine tool (100) such that the working space of the machine tool (100) is arranged between the two magazines (50, 60).

4. Machine tool (100) according to one of claims 1 to 3, **characterised in that** the two working spindles (10, 20) are configured to carry both a receiving means (21) for receiving a tool (22) and a clamping means (11) for clamping a workpiece (12).

5. Machine tool (100) according to one of claims 1 to 3, **characterised in that** a first (10) of the two work spindles (10, 20) can be positioned about a first axis of rotation (R1) and along a first linear axis (L1) relative to the second (20) of the two work spindles (10, 20), and the second work spindle (20) can be positioned about a second axis of rotation (R2), which extends parallel to the first axis of rotation (R1), and along a second and a third linear axis (L2, L3), which extend both perpendicular to one another and perpendicular to the first linear axis (L1).

6. Machine tool (100) according to one of the preceding claims, **characterised in that** the two work spindles (10, 20) are configured to assume a basic position in which the spindle axes lie in a plane, wherein a coaxial arrangement of the two work spindles (10, 20) can be produced from the basic position **in that** the work spindles (10, 20) are fed to one another only by a rotational movement about a respective axis of rotation (R1, R2) perpendicular to the plane.

7. Machine tool (100) according to one of the preceding claims, **characterised in that** the magazines (50, 60) are configured as wheel magazines and the manipulators (30, 40) are configured as double grippers.

8. Machine tool (100) according to one of the preceding claims, **characterised in that** the spindle axis of the work spindles (10, 20) is arranged horizontally, and
**in that** a first (10) of the two work spindles (10, 20) is arranged on a console on the machine bed (80) and the second (20) of the two work spindles (10, 20) is arranged on a cross table guided on the machine bed (80).

9. Method for machining a workpiece (12) by means of a tool (22, 22a, 22b) in a machine tool (100) according to one of claims 1 to 8, wherein the method comprises the following steps:
- clamping the workpiece (12) in a clamping means (11a) which is mounted on a first work spindle (10),
- receiving the tool (22b) in a receiving means (21b) which is mounted on a second work spindle (20),
- machining a first side (12a) of the workpiece (12) by means of the tool (22b) in accordance with an NC program.

10. Method according to claim 9, **characterised by** the following step:
- changing out the tool-carrying receiving means (21b) of the second work spindle (20) and changing in a non-workpiece-carrying clamping means (11b),
- transferring the workpiece from the workpiece-carrying clamping means (11a) of the first work spindle (10) to the non-workpiece-carrying clamping means (11b) of the second work spindle (20).

11. Method according to claim 10, **characterised by** the following steps:
- changing out the non-workpiece-carrying clamping means (11a) of the first work spindle (10) and changing in a tool-carrying receiving means (21a),
- machining a second side (12b) of the workpiece (12), which is opposite the already machined first side (12a) of the workpiece (12), by means of the tool (22a), which is received in the receiving means (21a) of the first work spindle (10), in accordance with the NC program.

12. Method according to claim 10, **characterised in that** the two work spindles (10, 20) assume a coaxial arrangement with respect to one another before the workpiece (12) is transferred from the first work spindle (10) to the second work spindle (20).

13. Method according to claim 12, **characterised in that** the following steps are carried out before the coaxial arrangement of the two work spindles (10, 20) is assumed:
- assuming a basic position in which the spindle axes lie in a plane, and
- rotating one of the two work spindles (10, 20) about an axis of rotation (R1, R2) perpendicular to the plane until the spindle axes of the two work spindles (10, 20) are coaxially aligned.

14. Method according to one of claims 10 to 13, **characterised in that** the workpiece (12) is transferred from the first work spindle (10) to the second work spindle (20) such that both work spindles (10, 20) are in contact with the workpiece (12) during the transfer.

## Revendications

1. Machine-outil (100) pour l'usinage par enlèvement de copeaux d'une pièce (12) au moyen d'un outil (22), la machine-outil (100) comprenant un moyen de serrage (11) pour serrer la pièce (12) et un moyen de réception (21) pour recevoir l'outil (22),
le moyen de serrage (11) étant monté sur une tête de broche d'une broche de travail (10) portant le moyen de serrage et le moyen de réception (21) étant monté sur une tête de broche d'une broche de travail (20) portant le moyen de réception, et
la machine-outil (100) étant conçue pour positionner les deux broches de travail (10, 20) l'une par rapport à l'autre au moyen d'axes à commande numérique de telle sorte que la pièce (12) serrée dans le moyen de serrage (11) puisse être usinée par l'outil (22) reçu dans le moyen de réception (21), et
les deux broches de travail (10, 20) pouvant être approchées l'une de l'autre respectivement par au moins un axe de rotation (R1, R2) et au moins un axe linéaire (L1, L2, L3),
**caractérisée par**
deux magasins (50, 60) qui sont conçus respectivement pour déposer des moyens de serrage (11) portant la pièce et ne portant pas la pièce ainsi que pour déposer des moyens de réception (21) portant l'outil et ne portant pas l'outil,
la machine-outil (100) comprenant en outre deux manipulateurs (30, 40) qui sont conçus pour insérer et remplacer des moyens de serrage (11) portant la pièce et/ou ne portant pas la pièce et des moyens de réception (21) portant l'outil et/ou ne portant pas l'outil sur les broches de travail (10, 20), et
chacune des deux broches de travail (10, 20) étant associée à au moins l'un des deux magasins (50, 60) et respectivement l'un des deux manipulateurs (30, 40) agissant entre l'une des deux broches de travail (10, 20) et son magasin (50, 60) associé.

2. Machine-outil (100) selon la revendication 1, **caractérisée en ce que** les deux magasins (50, 60) sont disposés à distance l'un de l'autre.

3. Machine-outil (100) selon la revendication 2, **caractérisée en ce que** les deux magasins (50, 60) sont disposés de telle sorte sur des côtés d'un espace de travail de la machine-outil (100) que l'espace de travail de la machine-outil (100) est disposé entre les deux magasins (50, 60).

4. Machine-outil (100) selon l'une quelconque des revendications 1 à 3, **caractérisée en ce que** les deux broches de travail (10, 20) sont conçues pour porter à la fois un moyen de réception (21) pour recevoir un outil (22) et un moyen de serrage (11) pour serrer une pièce (12).

5. Machine-outil (100) selon l'une quelconque des revendications 1 à 3, **caractérisée en ce qu'**une première (10) des deux broches de travail (10, 20) peut être positionnée autour d'un premier axe de rotation (R1) et le long d'un premier axe linéaire (L1) par rapport à la deuxième (20) des deux broches de travail (10, 20), et la deuxième broche de travail (20) peut être positionnée autour d'un deuxième axe de rotation (R2) qui s'étend parallèlement au premier axe de rotation (R1) et le long d'un deuxième et d'un troisième axe linéaire (L2, L3) qui s'étendent à la fois perpendiculairement l'un à l'autre et perpendiculairement au premier axe linéaire (L1).

6. Machine-outil (100) selon l'une quelconque des revendications précédentes, **caractérisée en ce que** les deux broches de travail (10, 20) sont conçues pour adopter une position de base dans laquelle les axes de broche se trouvent dans un plan, un agencement coaxial des deux broches de travail (10, 20) pouvant être généré à partir de la position de base, les broches de travail (10, 20) n'étant approchées l'une de l'autre que par un mouvement de rotation autour d'un axe de rotation respectif (R1, R2) perpendiculairement au plan.

7. Machine-outil (100) selon l'une quelconque des revendications précédentes, **caractérisée en ce que** les magasins (50, 60) sont réalisés sous forme de magasins à roues et les manipulateurs (30, 40) sous forme de pinces doubles.

8. Machine-outil (100) selon l'une quelconque des revendications précédentes, **caractérisée en ce que** l'axe de broche des broches de travail (10, 20) est disposé horizontalement, et
**en ce qu'**une première (10) des deux broches de travail (10, 20) est disposée sur une console sur le banc de machine (80) et la deuxième (20) des deux broches de travail (10, 20) est disposée sur le banc de machine (80) de manière guidée sur une table à croix.

9. Procédé pour l'usinage par enlèvement de copeaux d'une pièce (12) au moyen d'un outil (22, 22a, 22b) dans une machine-outil (100) selon l'une quelconque des revendications 1 à 8, le procédé présentant les étapes suivantes :
- serrage de la pièce (12) dans un moyen de serrage (11a) qui est monté sur une première broche de travail (10),
- réception de l'outil (22b) dans un moyen de réception (21b) qui est monté sur une deuxième broche de travail (20),
- usinage d'un premier côté (12a) de la pièce (12) au moyen de l'outil (22b) conformément à un programme NC.

10. Procédé selon la revendication 9, **caractérisé par** l'étape suivante :
- remplacement du moyen de réception (21b) portant l'outil de la deuxième broche de travail (20) et insertion d'un moyen de serrage (11b) ne portant pas la pièce,
- transfert de la pièce du moyen de serrage (11a) portant la pièce de la première broche de travail (10) au moyen de serrage (11b) ne portant pas la pièce de la deuxième broche de travail (20).

11. Procédé selon la revendication 10, **caractérisé par** les étapes suivantes :
- remplacement du moyen de serrage (11a) ne portant pas la pièce de la première broche de travail (10) et insertion d'un moyen de réception (21a) portant l'outil,
- usinage d'un deuxième côté (12b) de la pièce (12), qui est opposé au premier côté (12a) déjà usiné de la pièce (12), par l'outil (22a), qui est reçu dans le moyen de réception (21a) de la première broche de travail (10), conformément au programme NC.

12. Procédé selon la revendication 10, **caractérisé en ce que** les deux broches de travail (10, 20) adoptent un agencement coaxial l'une par rapport à l'autre avant le transfert de la pièce (12) de la première broche de travail (10) à la deuxième broche de travail (20).

13. Procédé selon la revendication 12, **caractérisé en ce que** les étapes suivantes sont réalisées avant l'adoption de l'agencement coaxial des deux broches de travail (10, 20) :
- adoption d'une position de base dans laquelle les axes de broche se trouvent dans un plan, et
- rotation d'une des deux broches de travail (10, 20) autour d'un axe de rotation (R1, R2) perpendiculairement au plan, jusqu'à l'orientation coaxiale des axes de broche des deux broches de travail (10, 20).

14. Procédé selon l'une quelconque des revendications 10 à 13, **caractérisé en ce que** le transfert de la pièce (12) de la première broche de travail (10) à la deuxième broche de travail (20) s'effectue de telle sorte que les deux broches de travail (10, 20) soient en contact avec la pièce (12) pendant le transfert.
